# EUROPEAN PATENT SPECIFICATION

(11) **EP 1 237 699 B1**
(45) Date of publication and mention of the grant of the patent: **10.11.2004**
(21) Application number: 00981407.0
(22) Date of filing: 24.11.2000
(51) Int. Cl.: B29C 44/42

(54) **METHOD FOR MANUFACTURING FOAMED PLASTICS PRODUCTS**
VERFAHREN ZUR HERSTELLUNG VON GESCHÄUMTEN KUNSTSTOFF-PRODUKTEN
PROCEDE DE FABRICATION DE PRODUITS EN MOUSSE PLASTIQUE

(30) Priority: 01.12.1999 FI 992573
(43) Date of publication of application: 11.09.2002
(73) Proprietor: Oy KWH Pipe AB, 65370 Vasa (FI)
(72) Inventor: ROLIN, Jan, FIN-10300 Karis (FI)
(74) Representative: Eriksson, Svante Johan Christer
(86) International application number: PCT/FI2000/001026
(87) International publication number: WO 2001/039950

(56) References cited:
- DE-A1- 2 329 023
- SE-B- 419 956
- US-A- 3 861 841
- US-A- 5 753 155

## Description

This invention concerns a method of making foamed plastic products, such as panels and tubes, comprising injection of a liquid thermosetting plastic under high pressure into an inclined mould. The mould comprises ventilation valves or openings in its highest part for evacuating air and/or gas.

The different components, of which foaming thermosetting plastic is made, are fed through separate tubes under high pressure to an injector, from which the mixture of thermosetting plastic, thus made, is injected into the mould.

In previously known methods of the above-mentioned type, the thermosetting plastic was injected through an injector into the mould in which the liquid-phase material mixture thus injected was allowed to expand, whereby air entrapped in the mould and gas released during the foaming of the material mixture were allowed to flow out through ventilation valves or openings.

A problem associated with a method of this kind is that substantially all plastic material, which is injected into the mould, tends to flow down to the bottom part of the mould, where the expansion of the plastic material then takes place. Therefore, the foamed plastic material formed during the expansion has to grow from the bottom of the mould. Due to the amount of plastic material, which is injected, there is a time difference between the first and the last injected plastic material, which leads to a corresponding time difference in the expansion of the plastic material. Hence, the mould contains at the same time both liquid thermosetting plastic and thermosetting plastic in different stages of the foaming process. This means that a gradually thicker and thicker layer of expanding plastic material is formed on the liquid plastic material, which expanding plastic material becomes more and more viscous, thus preventing the gases from the foaming process to escape from the mould. This will lead to air inclusions in the foamed plastic material causing poorer insulating properties and an uneven density distribution in the finished product.

This problem can be overcome partly by equipping the injector with a nozzle that disintegrates the plastic material injected to the walls of the mould. Due to the nature of thermosetting plastic, the nozzles have to be of a throw away type, making the use of them quite expensive, or otherwise an expensive mechanical cleaning of the nozzles have to be carried out at short intervals.

The object of the present invention is to eliminate these problems, which is achieved by a method characterized in that the injection is performed through at least two injectors oriented in such a way that the jets of the thermosetting plastic or the components thereof, streaming out of the injectors intersect, whereby the thermosetting plastic, when the jets strike against one another, disintegrates and is evenly spread inside the mould. Thus, the method according to the invention gives a considerably more even density distribution in the product and fewer air inclusions. Besides, no special cleaning of any nozzles is needed, since the spreading takes place in such a way that the thermosetting plastic jets strike against one another and thereby disintegrate.

The other characteristics of the invention will appear from the accompanying dependent claims.

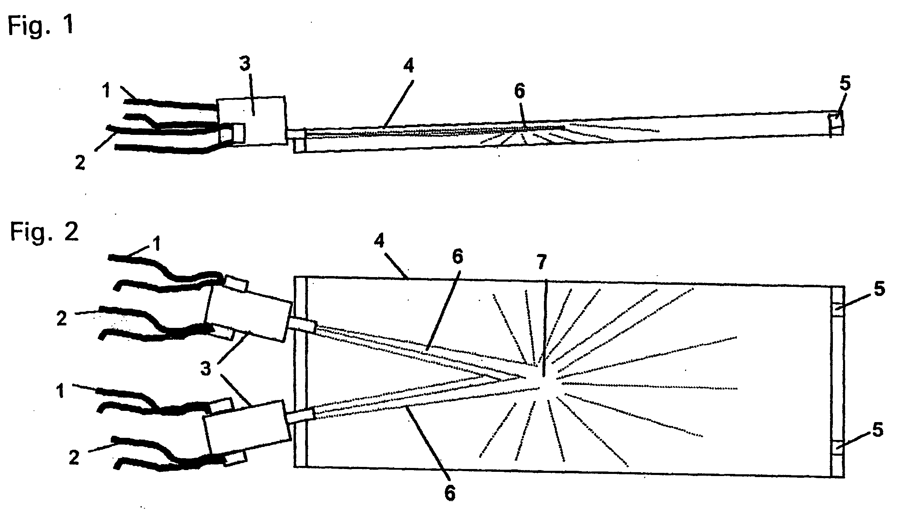

The invention will be described in more detail in the following, with reference to the accompanying drawing, wherein
Fig. 1 is a side view of a first example of injection of thermosetting plastic according to the method of the present invention into a mould for a panel,
Fig. 2 is a top view of the injection according to Fig. 1, and

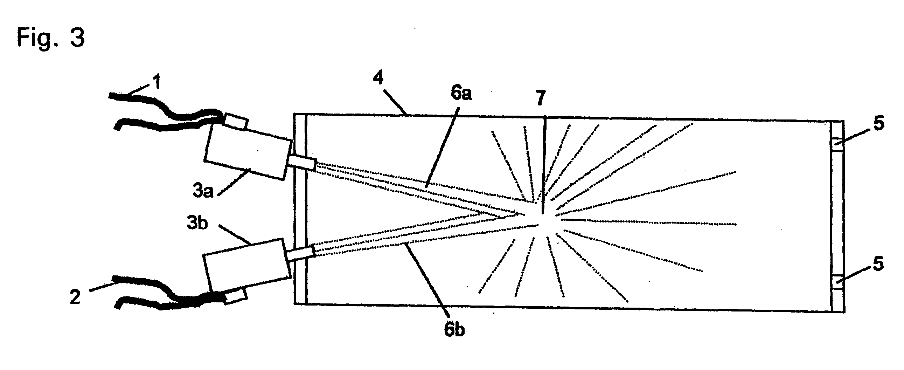

Fig. 3 shows a second example of an embodiment of the method according to the present invention.

In manufacturing foamed plastic products of thermosetting plastic according to a first embodiment, the different components of the thermosetting plastic are fed through separate feed lines 1, 2 under high pressure to an injector 3, in which they are mixed together and from which the thus made liquid thermosetting plastic is injected into a mould 4 having an interior corresponding to the shape of the product to be made. Preferably, the mould 4 is placed into a slightly inclined position, whereby the injection of the thermosetting plastic takes place through holes made for this purpose in the mould 4. Ventilation valves 5 are arranged in the highest part or parts of the mould 4, through which air entrapped in the mould 4 and gas released during the foaming of the thermosetting plastic are allowed to escape. According to the invention, at least two separate injectors 3 are employed, each of which is inserted through its own opening in the mould 4 in such a way that the thermosetting plastic jets streaming out of the injectors 3 intersect. As a result of the collision between the jets 6 at the intersection 7, the still liquid thermosetting plastic material disintegrates and is evenly spread inside the mould 4, at the same time the foaming and hardening process takes place. The product obtained after the foaming and hardening has been completed has a considerably more even density distribution and contains less air inclusions than products received by previously known methods.

According to a second embodiment, each main component of the thermosetting plastic is fed in liquid form through separate feed lines 1,2 under high pressure to an injector 3a, 3b of its own, wherefrom the different components are injected into the mould 4 in separate jets in such a way that the different component jets 6a and 6b intersect at a common point 7. When the jets 6a, 6b collide, the different components are mixed together and disintegrate, thus forming a liquid thermosetting plastic material the foaming and hardening process of which starts immediately, simultaneously as the disintegrated material is evenly spread inside the mould 4. In addition to the advantages achieved by the former embodiment, no injectors 3 are employed in this second embodiment, which results in a simpler apparatus requiring considerably less maintenance. As mixing of the different components takes place only in the mould there is no fouling due to started hardening in the feed channels of the components. Consequently, any frequent cleaning and changing of injectors are not needed, which considerably will decrease the running costs.

In the drawing, a mould 4 for manufacturing a panel is shown, but the method is also perfectly applicable to the manufacture of tubes.

The thermosetting plastic preferably employed in the method is polyurethane. In this case, to each injector 3 is charged, through a first feed line 1, a polyol mixture, under high pressure, comprising not only polyol, but also catalysts, water and possibly silicone, and through a second feed line 2 isocyanate, which two components are mixed together in the injector 3 to a liquid reaction mixture, which is injected into the mould 4 as described above. When a polyol mixture of the above-mentioned composition is used, a so-called foaming takes place, whereby a gas released from the propellant fills the cells formed in the thermosetting plastic material.

If the injectors 3 are pivoted to make the angle between the jets 6 coming out of them either continuously or stepwise changeable, the finished product will have an even better density distribution because the jet intersection 7 can be moved to different parts of the mould 4 during feeding of the reaction mixture into the mould 4.

## Claims

1. A method of making foamed plastic products, such as panels or tubes, comprising injection of a liquid thermosetting plastic under high pressure into a slightly inclined mould (4), having ventilation valves (5) or openings in its highest part for evacuating air and or gas, **characterized in that** the injection is performed through at least two injectors (3) oriented in such a way that the jets (6) of the thermosetting plastic or the components thereof streaming out of the injectors (3) intersect, whereby the thermosetting plastic, when the jets (6) strike against one another, disintegrates and is evenly spread inside the mould (4).

2. A method as defined in Claim 1, **characterized in that** the thermosetting plastic is polyurethane that is foamed by a propellant.

3. A method as defined in Claim 1 or 2, **characterized in that** the angle between the injectors (3) varies with the volume injected.

## Patentansprüche

1. Verfahren zur Herstellung von geschäumten Kunststoffprodukten, wie von Platten oder Rohren, bestehend aus Einspritzen eines flüssigen, in Wärme aushärtenden Kunststoffes unter hohem Druck in eine leicht geneigte Form (4), die zur Evakuierung von Luft oder Gas in ihrem höchsten Abschnitt Lüftungsventile (5) oder Öffnungen aufweist, **dadurch gekennzeichnet, dass** das Einspritzen durch mindestens zwei Injektoren (3) erfolgt, die derart angeordnet sind, dass die aus den Injektoren (3) herausströmenden Strahlen (6) des in Wärme aushärtenden Kunststoffes oder von dessen Komponenten sich überschneiden, wobei der in Wärme aushärtende Kunststoff desintegriert und innerhalb der Form (4) gleichmässig verteilt wird, wenn die Strahlen (6) gegeneineinader aufprallen.

2. Verfahren nach Anspruch 1, **dadurch gekennzeichnet, dass** der in Wärme aushärtende Kunststoff Polyurethan ist, das mit Hilfe eines Treibmittels geschäumt wird.

3. Verfahren nach Anspruch 1 oder 2, **dadurch gekennzeichnet, dass** der Winkel zwischen den Injektoren (3) mit dem eingespritzten Volumen variiert.

## Revendications

1. Procédé de fabrication de produits en plastique expansé, tels que des panneaux ou des tubes, comprenant l'injection d'un plastique thermodurcissable liquide sous haute pression dans un moule légèrement incliné (4), comportant des soupapes de ventilation (5) ou ouvertures dans sa partie supérieure pour évacuer l'air et/ou le gaz, **caractérisé en ce que** l'injection est effectuée par l'intermédiaire d'au moins deux injecteurs (3) orientés d'une façon telle que les jets (6) du plastique thermodurcissable ou des composants de celui-ci s'écoulant par les injecteurs (3) se coupent l'un l'autre, moyennant quoi le plastique thermodurcissable, lorsque les jets (6) se rencontrent, se désintègre et est réparti de façon uniforme dans le moule (4).

2. Procédé selon la revendication 1, **caractérisé en ce que** le plastique thermodurcissable est du polyuréthane qui est expansé par un gaz propulseur.

3. Procédé selon la revendication 1 ou 2, **caractérisé en ce que** l'angle entre les injecteurs (3) varie avec le volume injecté.
